# EUROPÄISCHE PATENTSCHRIFT

(11) **EP 1 481 855 B1**
(45) Veröffentlichungstag und Bekanntmachung des Hinweises auf die Patenterteilung: **29.04.2009**
(21) Anmeldenummer: 03011864.0
(22) Anmeldetag: 26.05.2003
(51) Int. Cl.: B60R 21/20

(54) **Luftsackhalter**
Airbag holder
Support pour sac à gaz

(43) Veröffentlichungstag der Anmeldung: 01.12.2004
(73) Patentinhaber: Delphi Technologies, Inc., Troy, MI 48007 (US)
(72) Erfinder: Lutter, Gerhard, 16562 Bergfelde (DE); Crohn, Detlef, 13156 Berlin (DE); Marotzke, Thomas, 16562 Bergfelde (DE)
(74) Vertreter: Denton, Michael John

(56) Entgegenhaltungen:
- EP-A- 0 732 237
- DE-A- 10 136 893
- DE-A- 10 152 624
- DE-A- 19 736 243
- US-A- 5 498 030
- US-A- 5 568 936
- US-A- 5 636 859
- US-A1- 2002 020 995

## Beschreibung

Die vorliegende Erfindung betrifft einen Luftsackhalter zum Befestigen eines Luftsacks an einem Bauteil eines Luftsackmoduls nach dem Oberbegriff des Anspruchs 1 (vgl. US 5,636,859).

Derartige Luftsackhalter dienen zur Befestigung eines Luftsacks an einer Grundplatte oder an einem Generatorträger eines Luftsackmoduls.

Aus der US 5,498,030 ist ein Luftsackmodul bekannt, bei dem aus dem Gewebe des Luftsacks ein Beutel genäht ist, der als Gehäuse und Abdeckung des Luftsackmoduls dient.

Es ist die Aufgabe der Erfindung, einen Luftsackhalter zu schaffen, der eine sichere und kostengünstige Montage eines Luftsackmoduls ermöglicht.

Die Lösung dieser Aufgabe erfolgt durch die Merkmale des Anspruchs 1 und insbesondere durch einen Luftsackhalter der eingangs genannten Art, der an seiner Unterseite mehrere Verbindungselemente aufweist, die zur Befestigung des Luftsackhalters an dem Bauteil des Luftsackmoduls dienen, wobei ferner an der Oberseite des Luftsackhalters eine sich entlang des Umfangs des Halters erstreckende Behälterwand vorgesehen ist, die in ihrem Inneren einen Aufnahmeraum für den Luftsack bildet.

Der erfindungsgemäße Luftsackhalter ermöglicht das Falten eines Luftsacks in den Aufnahmeraum hinein, wobei der in den Aufnahmeraum gefaltete Luftsack an seinem Außenumfang durch die Behälterwand gehalten ist. Hierdurch ist ausgeschlossen, dass sich Luftsackgewebe während der Montage einer Abdeckung des Luftsackmoduls zwischen der Abdeckung und dem Luftsackmodul einklemmt bzw. dass sich die vorgesehene Lüftsackfaltung unerwünscht auflöst.

Mit dem erfindungsgemäßen Luftsackhalter kann der Luftsack mit seinem Luftsackmund zunächst durch den Luftsackhalter gezogen und anschließend an den Verbindungselementen befestigt werden. Anschließend wird der Luftsackhalter an dem Bauteil des Luftsackmoduls, beispielsweise einem Generatorträger oder einer Basisplatte, mittels der Verbindungselemente befestigt, wodurch der Luftsack an dem Bauteil gehalten ist. Anschließend kann der Luftsack in den durch die Behälterwand gebildeten Aufnahmeraum hineingefaltet werden, wodurch eine kompakte Montageeinheit gebildet ist, die noch nicht mit einem Gasgenerator gekoppelt ist, der nur unter erhöhten Sicherheitsbedingungen gehandhabt werden darf. Diese gebildete Montageeinheit stellt ein autarkes Bauteil dar, mit dem sämtliche für die Luftsackentfaltung wichtige Funktionen wie beispielsweise Faltungssteuerung, Steuerung des Gasstroms sowie Fixierung des Package, eingestellt werden können.

Vorteilhafte Ausführungsformen der Erfindung sind in der Beschreibung, der Zeichnung sowie den Unteransprüchen beschrieben.

Nach einer ersten vorteilhaften Ausführungsform kann die Behälterwand dünnwandig und insbesondere flexibel ausgebildet sein. Hierdurch wird eine laterale Entfaltung des Luftsacks unterstützt, die bei bestimmten Anwendungsfällen wünschenswert ist.

Nach einer weiteren Ausbildung der Erfindung können in der Behälterwand Sollbruchstellen, beispielsweise Reißnähte oder Perforierungen vorgesehen sein, um ein seitliches Entfalten des Luftsacks zu unterstützen bzw. nicht zu behindern.

Nach einer weiteren vorteilhaften Ausführungsform kann innerhalb des Aufnahmeraums zumindest eine Trennwand vorgesehen sein. Eine solche Trennwand kann dazu dienen, die Luftsackentfaltung durch eine vorbestimmte Dichteverteilung des Luftsackgewebes innerhalb des Aufnahmeraumes zu steuern. Auch kann durch die Trennwand eine Steuerung der Gasstromrichtung erzielt werden, d.h. die Trennwand kann als Gasverteiler dienen.

Nach einer weiteren vorteilhaften Ausführungsform ist der Aufnahmeraum an seiner Oberseite verschlossen, beispielsweise durch eine Membran oder Folie. Die Membran oder Folie kann entweder nur zu Transportzwecken dienen und von dem Luftsackhalter wieder entfernbar bzw. abziehbar sein. Nach einer weiteren vorteilhaften Ausführungsform ist jedoch die Oberseite des Aufnahmeraumes durch eine Folie oder dünne Materialschicht verschlossen, die einstückig mit der Wand ausgebildet ist. Hierdurch ergibt sich der Vorteil, dass der gefaltete Luftsack innerhalb des Aufnahmeraums gehalten ist und sogar von der Unterseite des Luftsackhalters in den Aufnahmeraum hineingefaltet werden kann. Im gefalteten Zustand besteht somit nicht die Gefahr, dass sich Luftsackgewebe aus dem Aufnahmeraum nach oben herausbewegt. Die Membran, Folie oder dünne Materialschicht kann auch mit einer oder mehreren Sollbruchstellen bzw. Sollbruchnähten versehen sein, um beim Entfalten des Luftsacks ein störungsfreies Öffnen zu ermöglichen.

Nach einer weiteren vorteilhaften Ausführungsform ist in den Halter ein insbesondere käfigförmiger Diffusor integriert. Bei dieser Ausführungsform ist innerhalb des Aufnahmeraums durch den Diffusor Platz freigehalten, in den zu einem späteren Montagezeitpunkt ein Gasgenerator eingesetzt werden kann.

Nach einer weiteren Ausbildung der Erfindung kann der Halter an seiner Unterseite Öffnungen für den Durchtritt von Befestigungslaschen des Luftsacks aufweisen. Auf diese Weise ist es möglich, den Luftsackmund an dem Halter zu befestigen und gleichzeitig im Bereich des Aufnahmeraums einen käfigförmigen Diffusor anzuordnen.

Wie eingangs bereits beschrieben, weist eine Montageeinheit gemäß der Erfindung einen erfindungsgemäßen Luftsackhalter auf, wobei in dem Aufnahmeraum des Luftsackhalters ein zusammengefalteter Luftsack angeordnet ist. Eine derartige Montageeinheit ermöglicht nicht nur ein sicheres Montieren des Luftsacks an dem Luftsackmodul, derart dass ein unerwünschtes Einklemmen von Luftsackgewebe vermieden ist. Erfindungsgemäß ermöglicht die Montageeinheit darüber hinaus eine selbständige und aufgrund des fehlenden Gasgenerators auch sicher zu handhabende Baueinheit, in die hinein das Luftsackgewebe gefaltet werden kann, so dass ein kompaktes Package erhalten wird.

Nach einer weiteren Ausführungsform der Erfindung kann der in die Montageeinheit eingefaltete Luftsack durch eine entfernbare Abdeckung in dem Aufnahmeraum gehalten sein. Hierbei kann es sich beispielsweise um eine entfernbare Folie oder einen Klebestreifen handeln, die erst dann entfernt werden, wenn die Montageeinheit an dem Luftsackmodul befestigt ist und die Abdeckung des Luftsackmoduls montiert werden soll.

Nachfolgend wird die vorliegende Erfindung beispielhaft anhand vorteilhafter Ausführungsformen und unter Bezugnahme auf die beigefügten Zeichnungen beschrieben. Es zeigen:
- Fig. 1A: eine perspektivische Ansicht einer ersten Ausführungsform eines Luftsackhalters;
- Fig. 1B: eine perspektivische Ansicht einer weiteren Ausführungsform eines Luftsackhalters;
- Fig. 1 C: eine vergrößerte Teilquerschnittsansicht des Luftsackhalters von Fig. 1 B;
- Fig. 2: einen Schnitt durch ein Luftsackmodul mit einem Luftsackhalter nach Fig. 1A;
- Fig. 3: einen Schnitt durch eine weitere Ausführungsform eines Luftsackhalters;
- Fig. 4: eine perspektivische Ansicht des Luftsackhalters von Fig. 3 mit eingefaltetem Luftsack;
- Fig. 5: eine schematische, verkleinerte Ansicht des Luftsacks von Fig. 4;
- Fig. 6: eine perspektivische Darstellung eines weiteren Luftsackhalters gemäß der Erfindung zum Einbau in eine Armaturentafel; und
- Fig. 7: eine Schnittansicht durch den Luftsackhalter von Fig. 6.

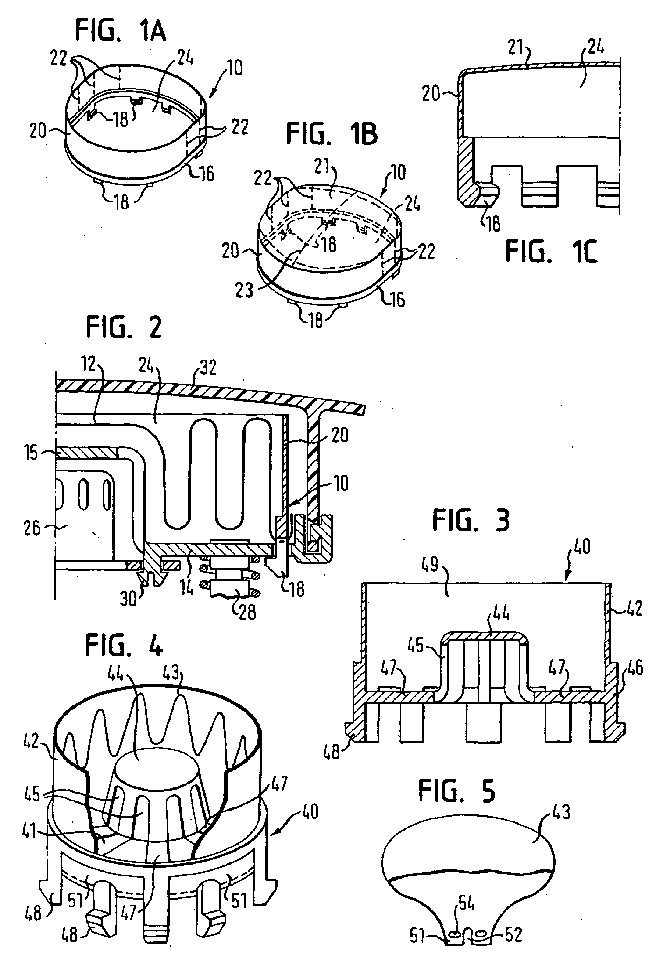

Fig. 1A zeigt eine perspektivische Ansicht eines Luftsackhalters 10 zum Befestigen eines Luftsacks 12 (Fig. 2) an einem Generatorträger 14 (Fig. 2) eines Luftsackmoduls, der einstückig mit einem Diffusor 15 verbunden ist. Der Luftsackhalter 10 besteht aus einem annähernd O-förmigen Haltering 16, an dessen Unterseite mehrere Rasthaken 18 angeformt sind. An der Oberseite des Halterings 16 ist entlang des gesamten Außenumfangs eine sich vertikal nach oben erstreckende, geschlossene Behälterwand 20 angeformt, die dünnwandig und flexibel ausgebildet ist. Senkrecht zur Umfangsrichtung sind an der Behälterwand mehrere Sollbruchstellen 22 in Form von Reißnähten vorgesehen, um ein seitliches Entfalten des Luftsackes nicht zu behindern.

Wie Fig. 1A zeigt, ist durch die Behälterwand 20 ein in Umfangsrichtung geschlossener Aufnahmeraum 24 gebildet, der zur Oberseite und zur Unterseite des Luftsackhalters 10 hin offen ist.

Fig. 2 zeigt den Luftsackhalter 10 von Fig. 1A, der in ein Luftsackmodul eingebaut ist. Wie zu erkennen ist, ist der Luftsackmund des Luftsacks 12 mit mehreren Öffnungen versehen, durch welche die Rasthaken 18 des Luftsackhalters 10 gesteckt werden können. Hierzu wird zunächst der Luftsackmund von oben durch den Luftsackhalter 10 gesteckt und anschließend werden die Rasthaken 18 durch die am Luftsackmund vorgesehenen Öffnungen geführt. Anschließend wird die so gebildete Einheit in dem Generatorträger 14 verrastet, wodurch der Luftsack 12 an dem Generatorträger 14 befestigt ist.

Da zu diesem Zeitpunkt ein Gasgenerator 26 des Luftsackmoduls noch nicht montiert ist, kann der Luftsack 12 mit der gewünschten Faltung in den Aufnahmeraum 24 hineingefaltet werden, ohne dass besondere Sicherheitsvorkehrungen getroffen werden müssten. Die anschließend erhaltene Montageeinheit kann einfach und gefahrlos gehandhabt werden, wobei zur Halterung des gefalteten Luftsacks 12 oberhalb des Aufnahmeraums 24 eine entfernbare Folie oder dergleichen angebracht werden kann.

In die so erhaltene Montageeinheit kann anschließend von unten der Gasgenerator 26 eingesetzt werden, wobei dieser beispielsweise in dem Generatorträger 14 mit Hilfe von Rasthaken 30 verrastet werden kann. Anschließend kann eine Abdeckung 32 des Luftsackmoduls in dem Generatorträger 14 verrastet werden, wobei vorher gegebenenfalls die an dem Luftsackhalter angebrachte Schutzfolie entfernt wird. Anschließend kann das Luftsackmodul über Befestigungsbolzen 28 beispielsweise an einer Kontaktbrücke eines Fahrerairbagmoduls befestigt werden.

Die Fig. 1B und 1C eigen eine weitere Ausführungsform eines Luftsackhalters 10, der im Wesentlichen wie der Luftsackhalter 10 von Fig. 1A ausgebildet, jedoch zusätzlich an seiner Oberseite mit einer Materialschicht 21 versehen ist, die den Aufnahmeraum 24 nach oben hin verschließt. Wie insbesondere Fig. 1C zeigt, ist die Materialschicht 21 einstückig mit der flexiblen Wand 20 ausgebildet.

Ferner zeigt Fig. 1B, dass im Bereich der Materialschicht 21 mehrere Sollbruchlinien 23 vorgesehen sind, die ein leichtes Öffnen der Materialschicht 21 beim Entfalten des Luftsacks ermöglichen.

Bei der in den Fig. 1B und 1C gezeigten Ausführungsformen des Luftsackhalters kann der Luftsack von der Unterseite des Luftsackhalters in den Aufnahmeraum 24 hineingefaltet werden, wobei anschließend der Luftsackmund mit daran vorgesehenen Öffnungen über die Rasthaken 18 geführt wird.

Fig. 3 zeigt eine weitere Ausführungsform eines Luftsackhalters 40, der grundsätzlich ähnlich wie der Luftsackhalter 10 von Fig. 1A aufgebaut ist. Der Luftsackhalter 40 weist ebenfalls einen Haltering 46 auf, an den einstückig eine in Umfangsrichtung geschlossene Behälterwand 42 angeformt ist, wodurch ein Aufnahmeraum 49 gebildet ist. An der Unterseite des Halterings 46 befinden sich Rasthaken 48, die zur Befestigung des Luftsackhalters 40 an ein Bauteil des Luftsackmoduls sowie zur Klemmung des Luftsacks 43 (Fig. 4, 5) dienen.

Wie die Fig. 3 und 4 zeigen, ist der Luftsackhalter 40 im Inneren des Aufnahmeraums 49 mit einem käfigförmigen Diffusor 44 versehen, der über Befestigungsarme 47 einstückig mit dem Haltering 46 verbunden ist. Der Diffusor 44 bildet einen topfförmigen Aufnahmeraum für den Gasgenerator 26 und weist hierzu über seinen Umfang verteilt Gasdurchtrittsöffnungen 45 auf.

Fig. 5 zeigt in stark vereinfachter Darstellung den Luftsack 43 von Fig. 4. Hierbei ist zu erkennen, dass im Bereich des Luftsackmundes der Luftsack 43 mit Befestigungslaschen 51 versehen ist, die durch einen nach außen offenen Schlitz 52 beabstandet sind. In jeder Befestigungslasche 51 ist ferner eine Durchtrittsöffnung 54 vorgesehen, die zum Durchführen der Rasthaken 48 dient.

Durch gemeinsame Betrachtung der Fig. 4 und 5 ist zu erkennen, dass der Luftsack 43 mit den Befestigungslaschen 51 durch Öffnungen 41 geführt wird, die von den Befestigungsarmen 47 und dem Diffusor 44 sowie dem Haltering 46 begrenzt sind. Durch den zwischen den Befestigungslaschen 51 vorgesehen Schlitz 52 kann jede Befestigungslasche 51 so weit über einen Rasthaken 48 gezogen werden, bis dieser durch die Durchtrittsöffnung 54 gelangen kann, so dass im montierten Zustand sich innerhalb jedes Schlitzes 52 ein Befestigungsarm 47 befindet.

Nachdem der Luftsack 43 auf die oben beschriebene Weise an dem Luftsackhalter 40 befestigt worden ist, kann der Luftsack in den im Inneren der Behälterwand 42 gebildeten Aufnahmeraum 49 hineingefaltet werden.

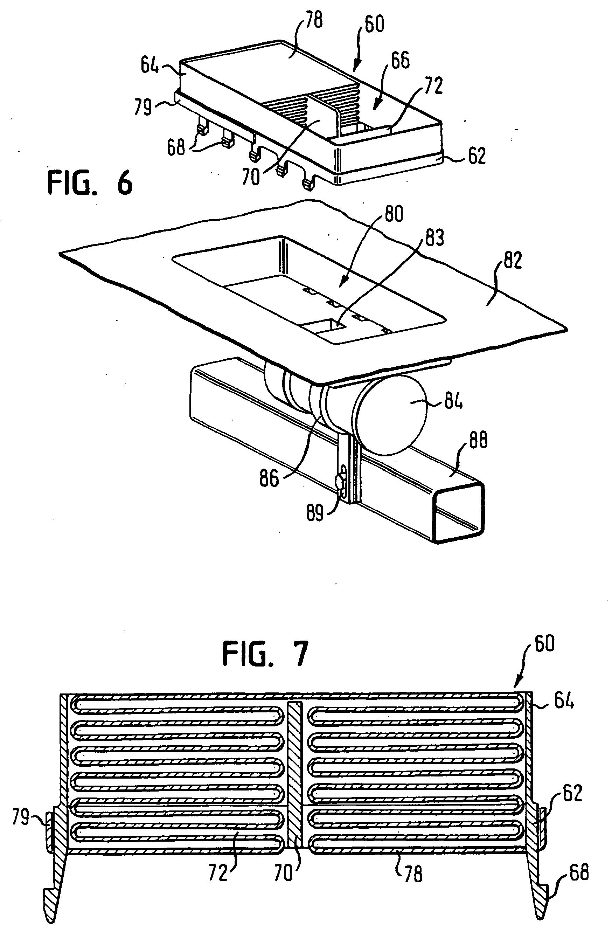

Die Fig. 6 und 7 zeigen eine weitere Ausführungsform eines Luftsackhalters, der für ein Beifahrerairbagmodul vorgesehen ist. Der in den Fig. 6 und 7 dargestellte Luftsackhalter 60 ist in Draufsicht rechteckig ausgebildet und weist wiederum einen Haltering 62 auf, der an seiner Unterseite mit Rasthaken 68 versehen ist. An der Oberseite des Halterings 62 ist eine in Umfangrichtung geschlossene, sich vertikal erstreckende Behälterwand 64 vorgesehen, die einen Aufnahmeraum 66 für einen Luftsack 78 bildet. Im Inneren des Aufnahmeraums 66 ist eine sich in Längsrichtung und vertikal erstreckende Trennwand 70 vorgesehen, die über Stege 72 mit dem Haltering 62 verbunden ist.

Wie die Fig. 6 und 7 zeigen, ist der Luftsack 78 mit seinem Luftsackmund an dem Luftsackhalter 60 befestigt, indem die Rasthaken 68 durch Öffnungen im Luftsackmund gesteckt sind, so dass nur ein Umfangsrand 79 des Luftsacks 78 außerhalb des Luftsackhalters 60 verbleibt. Im Übrigen ist der Luftsack 78 vollständig innerhalb des Aufnahmeraums 66 untergebracht.

Wie Fig. 6 zeigt, dient die Montageeinheit bestehend aus Luftsackhalter 60 und Luftsack 78 zum Einbau in eine Montageaussparung 80, die im Bereich einer Armaturentafel 82 vorgesehen ist. Am Boden der Montageaussparung 80 ist ein Gaskanal 83 vorgesehen, um Gas eines Gasgenerators 84 in das Innere des Luftsacks 78 zu fördern. Zu diesem Zweck ist der Gasgenerator 84 im Bereich des Gaskanals 83 abgedichtet montiert. Das hintere Ende des zylinderförmigen Gasgenerators 84 ist dagegen über eine Klemmbefestigung 86 an einem Querträger 88 des zugehörigen Fahrzeugs mit Hilfe eines Langlochs 89 höhenverstellbar befestigt.

Bei dieser Ausführungsform ergibt sich der außerordentliche Vorteil, dass die Montageeinheit bestehend aus Luftsackhalter 60 und Luftsack 78 in die Montageaussparung 80 eingesetzt werden kann, woraufhin die Rasthaken 68 im Bereich der dazu korrespondierenden Öffnungen im Boden der Montageaussparung 80 verrasten. Hierdurch ist der wesentliche Teil des Luftsackmoduls bereits in der Armaturentafel 82 montiert, ohne dass jedoch der Gasgenerator 84 bereits eingebaut ist. Somit können weitere Montagearbeiten, wie beispielsweise das Anbringen einer Abdeckung vorgenommen werden. Erst wenn diese Arbeiten abgeschlossen sind, muss der Gasgenerator 84 montiert werden, indem dieser im Bereich des Gaskanals 83 abgedichtet montiert und durch die Klemmbefestigung 86 befestigt wird.

Da es in der Praxis häufig zu geringen Toleranzen zwischen dem fahrzeugfesten Querträger 88 und der Armaturentafel 82 kommt, ist erfindungsgemäß das Langloch 89 vorgesehen, das einen gewissen Ausgleich zwischen dem im Bereich der Armaturentafel 82 vorgesehenen Airbagmodul und dem karosseriefesten Querträger 88 ermöglicht.

### Bezugszeichenliste

- 10: Luftsackhalter
- 12: Luftsack
- 14: Generatorträger
- 15: Diffusor
- 16: Haltering
- 18: Rasthaken
- 20: Behälterwand
- 21: dünne Materialschicht
- 22: Sollbruchstellen
- 23: Sollbruchlinien
- 24: Aufnahmeraum
- 26: Gasgenerator
- 28: Befestigungsbolzen
- 30: Rasthaken
- 32: Abdeckung
- 40: Luftsackhalter
- 41: Öffnungen
- 42: Behälterwand
- 43: Luftsack
- 44: Diffusor
- 45: Gasdurchtrittsöffnungen
- 46: Haltering
- 47: Befestigungsarme
- 48: Rasthaken
- 49: Aufnahmeraum
- 51: Befestigungslaschen
- 52: Schlitz
- 54: Durchtrittsöffnung
- 60: Luftsackhalter
- 62: Haltering
- 64: Behälterwand
- 66: Aufnahmeraum
- 68: Rasthaken
- 70: Trennwand
- 72: Stege
- 78: Luftsack
- 79: Luftsackrand
- 80: Montageaussparung
- 82: Armaturentafel
- 83: Gaskanal
- 84: Gasgenerator
- 86: Klemmbefestigung
- 88: Querträger
- 89: Langloch

## Patentansprüche

1. Luftsackhalter (10, 40, 60) zum Befestigen eines Luftsacks (12, 43, 78) an einem Bauteil (14, 82) eines Luftsackmoduls, wobei der Halter (10, 40, 60) einen Haltering (16, 46, 62) aufweist,
**dadurch gekennzeichnet, dass**
an der Unterseite des Halters (10, 40, 60) mehrere Verbindungselemente (18, 48, 68) vorgesehen sind, die zum Befestigen des Halters (10, 40, 60) an dem Bauteil dienen, und
dass an der Oberseite des Halters (10, 40, 60) eine sich entlang des Umfangs des Halters erstreckende Behälterwand (20, 42, 64) vorgesehen ist, die in ihrem Inneren einen Aufnahmeraum (24, 49, 66) für den Luftsack (12, 43, 78) bildet.

2. Luftsackhalter nach Anspruch 1,
**dadurch gekennzeichnet, dass**
die Behälterwand (20, 42, 64) dünnwandig und insbesondere flexibel ausgebildet ist.

3. Luftsackhalter nach einem der vorstehenden Ansprüche,
**dadurch gekennzeichnet, dass**
in der Behälterwand (20) Sollbruchstellen (22), insbesondere Reißnähte und/oder Perforierungen vorgesehen sind.

4. Luftsackhalter nach einem der vorstehenden Ansprüche,
**dadurch gekennzeichnet, dass**
innerhalb des Aufnahmeraumes (66) zumindest eine Trennwand (70) vorgesehen ist.

5. Luftsackhalter nach einem der vorstehenden Ansprüche,
**dadurch gekennzeichnet, dass**
der Aufnahmeraum (24, 49, 66) an seiner Oberseite vollständig offen ist.

6. Luftsackhalter nach einem der vorstehenden Ansprüche 1 bis 4,
**dadurch gekennzeichnet, dass**
der Aufnahmeraum (24, 49, 66) an seiner Oberseite durch eine Membran, Folie oder dünne Materialschicht (21) verschlossen ist,
die insbesondere einstückig mit der Wand ausgebildet und/oder mit Sollbruchstellen (23) versehen ist.

7. Luftsackhalter nach einem der vorstehenden Ansprüche,
**dadurch gekennzeichnet, dass**
in den Halter (40) ein insbesondere käfigförmiger Diffusor (44) integriert ist.

8. Luftsackhalter nach Anspruch 7,
**dadurch gekennzeichnet, dass**
durch den Diffusor (44) und die Behälterwand (42) zumindest bereichsweise ein ringförmiger Aufnahmeraum (49) gebildet ist.

9. Luftsackhalter nach einem der vorstehenden Ansprüche,
**dadurch gekennzeichnet, dass**
der Halter (40) an seiner Unterseite Öffnungen (41) für den Durchtritt von Befestigungslaschen (S1) des Luftsacks (43) aufweist.

10. Montageeinheit mit einem Luftsackhalter (10, 40, 60) nach zumindest einem der vorstehenden Ansprüche, wobei in dem Aufnahmeraum (24, 49, 66) ein zusammengefalteter Luftsack (12, 43, 78) angeordnet ist.

11. Montageeinheit nach Anspruch 10,
**dadurch gekennzeichnet, dass**
der gefaltete Luftsack (12, 43, 78) durch eine an der Oberseite des Luftsackhalters vorgesehene, entfernbare Abdeckung oder durch eine mit dem Luftsackhalter insbesondere einstückig verbundene Membran oder Materialschicht (21) in dem Aufnahmeraum (24, 49, 66) gehalten ist.

## Claims

1. Airbag holder (10, 40, 60) for fastening an airbag (12, 43, 78) to a component (14, 82) of an airbag module, the holder (10, 40, 60) comprising a holding ring (16, 46, 62), **characterised in that** on the lower side of the holder (10, 40, 60) are provided several connecting elements (18, 48, 68) which serve to fasten the holder (10, 40, 60) to the component, and **in that** on the upper side of the holder (10, 40, 60) is provided a container wall (20, 42, 64) which extends along the circumference of the holder and which in its interior forms a holding chamber (24, 49, 66) for the airbag (12, 43, 78).

2. Airbag holder according to claim 1, **characterised in that** the container wall (20, 42, 64) is thin-walled and in particular flexible.

3. Airbag holder according to any of the preceding claims, **characterised in that** in the container wall (20) are provided predetermined break points (22), in particular tear seams and/or perforations.

4. Airbag holder according to any of the preceding claims, **characterised in that** within the holding chamber (66) is provided at least one partition (70).

5. Airbag holder according to any of the preceding claims, **characterised in that** the holding chamber (24, 49, 66) is completely open on its upper side.

6. Airbag holder according to any of the preceding claims 1 to 4, **characterised in that** the holding chamber (24, 49, 66) is closed on its upper side by a membrane, film or thin layer of material (21) which is in particular designed in one piece with the wall and/or provided with predetermined break points (23).

7. Airbag holder according to any of the preceding claims, **characterised in that** in the holder (40) is integrated in particular a cage-like diffuser (44).

8. Airbag holder according to claim 7, **characterised in that** by the diffuser (44) and the container wall (42) at least in one region is formed an annular holding chamber (49).

9. Airbag holder according to any of the preceding claims, **characterised in that** the holder (40) on its lower side has openings (41) for the passage of fastening straps (51) of the airbag (43).

10. Assembly unit having an airbag holder (10, 40, 60) according to one or more of the preceding claims, a folded-up airbag (12, 43, 78) being arranged in the holding chamber (24, 49, 66).

11. Assembly unit according to claim 10, **characterised in that** the folded airbag (12, 43, 78) is held in the holding chamber (24, 49, 66) by a removable cover provided on the upper side of the airbag holder or by a membrane or layer of material (21) which is in particular connected in one piece with the airbag holder.

## Revendications

1. Support pour sac à gaz (10, 40, 60) pour fixer un sac à gaz (12, 43, 78) sur un composant (14, 82) d'un module de sac à gaz, dans lequel le support (10, 40, 60) présente une bague de retenue (16, 46, 62),
**caractérisé en ce que**
sur la face inférieure du support (10, 40, 60) sont prévus plusieurs éléments de liaison (18, 48, 68) qui servent à fixer le support (10, 40, 60) sur le composant, et
**en ce que** sur la face supérieure du support (10, 40, 60) est prévue une paroi de réceptacle (20, 42, 64) s'étendant le long de la périphérie du support, laquelle forme dans son intérieur un espace de réception (24, 49, 66) pour le sac à gaz (12, 43, 78).

2. Support pour sac à gaz selon la revendication 1,
**caractérisé en ce que**
la paroi de réceptacle (20, 42, 64) est réalisée mince et en particulier flexible.

3. Support pour sac à gaz selon l'une quelconque des revendications précédentes,
**caractérisé en ce que**
dans la paroi de réceptacle (20) sont prévus des emplacements destinés à la rupture (22), en particulier des coutures de déchirement et/ou des perforations.

4. Support pour sac à gaz selon l'une quelconque des revendications précédentes,
**caractérisé en ce que**
au moins une cloison de séparation (70) est prévue à l'intérieur de l'espace de réception (66).

5. Support pour sac à gaz selon l'une quelconque des revendications précédentes,
**caractérisé en ce que**
l'espace de réception (24, 49, 66) est totalement ouvert sur sa face supérieure.

6. Support pour sac à gaz selon l'une des revendications 1 à 4,
**caractérisé en ce que**
l'espace de réception (24, 49, 66) est fermé sur sa face supérieure par une membrane, une feuille ou une mince couche de matériau (21) qui est réalisée en particulier d'un seul tenant avec la paroi et/ou qui est pourvue d'emplacements destinés à la rupture (23).

7. Support pour sac à gaz selon l'une quelconque des revendications précédentes,
**caractérisé en ce que**
un diffuseur (44) en particulier en forme de cage est intégré dans le support (40).

8. Support pour sac à gaz selon la revendication 7,
**caractérisé en ce que**
un espace de réception (49) annulaire est formé par le diffuseur (44) et la paroi de réceptacle (42) au moins sur certaines zones.

9. Support pour sac à gaz selon l'une quelconque des revendications précédentes,
**caractérisé en ce que**
le support (40) présente sur sa face inférieure des ouvertures (41) pour le passage de pattes de fixation (51) du sac à gaz (43).

10. Unité de montage avec un support pour sac à gaz (10, 40, 60) selon au moins l'une des revendications précédentes, dans laquelle un sac à gaz (12, 43, 78) replié est agencé dans l'espace de réception (24, 49, 66).

11. Unité de montage selon la revendication 10,
**caractérisée en ce que**
le sac à gaz (12, 43, 78) replié est retenu dans l'espace de réception (24, 49, 66) par un couvercle amovible prévu sur la face supérieure du support de sac à gaz ou par une membrane ou une couche de matériau (21) reliée en particulier d'un seul tenant avec le support de sac à gaz.
